# EUROPEAN PATENT SPECIFICATION

(11) **EP 1 002 016 B1**
(45) Date of publication and mention of the grant of the patent: **23.02.2005**
(21) Application number: 98939288.1
(22) Date of filing: 07.08.1998
(51) Int. Cl.: C08L 23/08, C09J 123/08, B32B 27/32

(54) **DELAMINATION PEEL SEAL WITH IMPROVED ANTIBLOCK PROPERTIES**
DURCH DELAMINATION ABZIEHBARE VERSIEGELUNG MIT VERBESSERTEN ANTIBLOCK-EIGENSCHAFTEN
FERMETURE PELABLE PAR DELAMINATION PRESENTANT DES PROPRIETES ANTI-ADHERENTES AMELIOREES

(30) Priority: 08.08.1997 US 55056 P
(43) Date of publication of application: 24.05.2000
(73) Proprietor: E.I. DU PONT DE NEMOURS AND COMPANY, Wilmington, Delaware 19898 (US)
(72) Inventor: POWELL, Richard, James, Orange, TX 77632 (US)
(74) Representative: Carpmaels & Ransford
(86) International application number: PCT/US1998/016489
(87) International publication number: WO 1999/007786

(56) References cited:
- DE-A- 19 610 415
- US-A- 4 550 141
- US-A- 5 160 767
- US-A- 5 574 108

## Description

### FIELD OF THE INVENTION

This invention relates to delamination peel seal layers and structures comprising an ethylene/acid copolymer or an ionomer. This invention specifically relates to delamination peel seal layers and structures further comprising high density polyethylene which demonstrate reduced blocking. Such layers and structures are useful in packaging applications that require a peelable seal.

### BACKGROUND OF THE INVENTION

Ethylene/acid copolymer and ionomer films and resin coatings can exhibit a tendency to block during processing of these materials. Whether processed as a film itself, as a film layer coextruded with other layers, or as a coating on a film, surfaces of these materials will often stick together during blown film production. This makes separation of the layers for further use difficult.

Film blocking forces can cause tearing or poor mill roll quality during the in-line slitting, separation and wind-up process in blown film production. In these cases the line must be slowed to reduce the stresses, but this in turn limits productivity. High blocking forces also retard or even prevent slip additive migration to the surface or interface and this can result in poor performance in smoothly moving through packaging or bag forming equipment.

A common way to reducing blocking is by the addition of anti-block additives. Silicas, such as diatomaceous earth or silica dioxide particles are commonly used as antiblock additives for polyethylene, ethylene/(meth)acrylic acid copolymers and ionomer films and coatings. Levels used are of the order of 0.3 to 1.5% by weight, usually added by incorporating concentrates containing 10 to 20% silica. These concentrates are expensive and add to the expense of the final product. In addition, silica dioxide particles are very abrasive and can add to the cost of maintaining sharp knives in film slitting, as well as in underwater pellet cutters.

There is a need for a lower-cost alternative to conventional antiblock additives for ethylene/acid copolymer and ionomer films and coating resins used in delamination peel seal layers and structures.

U.S. Patent No. 4,550,141 discloses blends of (a) 80-93 weight percent of an ethylene/acid ionomer, and (b) 7-20 weight percent of a propylene/α-olefin copolymer, which are used to prepare peelable seals having nearly constant and predictable peel strength over an extended heat seal temperature range.

U.S. Patent No. 5,160,767 discloses a polymeric blend consisting essentially of 65% to 95% by weight of a propylene polymer and 35% to 5% of an ethylene polymer having a density of at least 0.940.

U.S. Patent No 4,550,141 discloses blends of (a) 80-93 wt/% ionomer and (b) 7-20 wt/% propylene copolymer, used to prepare peelable seals.

### SUMMARY OF THE INVENTION

The invention herein provides a delamination peel seal layer comprising a blend of: (a) an ionomer that is up to 80% neutralized, and (b) 1% to 15% by weight of high density polyethylene.

The invention also provides a delamination peel seal structure comprising a seal layer coextruded with a thermoplastic film, wherein the seal layer comprises a blend of (a) an ionomer that is up to 80% neutralized, and (b) 1% to 15% by weight of high density polyethylene.

Optionally the peel seal layer may also comprise a slip additive or other useful additives, such as antioxidants.

### DETAILED DESCRIPTION

Ethylene/acid copolymers and ionomer films and resin coatings have been found to be useful in delamination peel seal layers and structures. A "delamination peel seal layer" may be defined as an adhesive layer that is heat-sealable, used to firmly adhere two structures or layers together, though remain peelable at a designed strength. Though not limited to any one peel mechanism, the delamination peel seal layer typically peels by breakage or tearing through the peel seal layer, followed by controlled strength peeling from a high density polyethylene or other thermoplastic substrate layer.

A "delamination peel seal structure" comprises a delamination peel seal layer in combination with substrates, structures or layers that are to be sealed or joined. For example, a delamination peel seal structure may include a delamination peel seal layer coextruded with a thermoplastic film, e.g. a layer of high density polyethylene (HDPE). The HDPE layer may form a package or container that is sealed at an opening by a delamination peel seal layer.

Ethylene/acid copolymers, or simply acid copolymers, and their corresponding ionomers are well known in the art to be copolymers of ethylene with an olefinically unsaturated organic mono- or di-acid such as acrylic or methacrylic acid, or maleic acid or fumaric acid or their anhydrides, the acid (or anhydride) typically comprising about 0.5 to 50 mole percent of the total polymeric material. Ethylene/acid copolymers and their methods of preparation are well known in the art and are disclosed in, for example, U.S. Pat. Numbers 3,264,272, 3,404,134, 3,355,319 and 4,321,337, incorporated by reference herein.

Ethylene/acid copolymers useful in the delamination peel seal layer and structure of the invention herein, typically have an acid content ranging from about 8% to about 15% by weight, preferably about 9% to about 14% by weight.

Ethylene/acid/acrylate terpolymer and corresponding ionomers are well known in the art to be copolymers of ethylene, an olefinically unsaturated organic acid such as acrylic or methacrylic acid and an alkyl acrylate or methacrylate termonomer (e.g. n-butyl acrylate or methacrylate or isobutylacrylate).

The delamination peel seal layer or structure of the invention herein may comprise acid copolymers, corresponding ionomers, or blends thereof. In this disclosure, the word "copolymer" means a polymer polymerized from two or more monomers, and includes terpolymers. The more specific description, e.g. 'ethylene methacrylic acid copolymer', and the like, is meant to include copolymers which may also have a third monomer present.

The acid copolymers are termed ionomers when the acid is neutralized in whole or in part to produce a salt. The cations for said salts are usually an alkali metal such as sodium, potassium, or the like, or divalent or trivalent metal ions. Suitable acid copolymers and ionomers are available from the DuPont Company, Wilmington, DE, under the trade names Nucrel® and Surlyn®, respectively.

There are three key compositional features to the ionomers suitable for this invention. They are the average acid level of the ethylene-acid copolymers, the average level of neutralization for corresponding ionomers, and the type and relative amounts of metal ions with which the materials are neutralized.

The average weight percent acid of the corresponding or underlying acid copolymers should be between about 8% and about 15%, preferably between about 9% and 14%. It will be recognized that a blend with this level of acid can be obtained by blending copolymers, one or both of which has an acid level outside this range. Preferably the weight percent acid in each acid copolymer, and those from which the ionomers are derived should be close to the 8% to 15% range, and most preferably they should be within this range.

The average level of neutralization of the acid groups in the underlying ethylene/acid copolymers will range up to about 80%, and should be greater than about 10 percent, though preferably not higher than about 35 percent. More preferably, the average level of neutralization is from about 20% to about 30%.

As mentioned above, a delamination peel seal layer or structure may comprise blends of ionomers or ionomers and acid copolymers. Commercially produced ionomers may have their underlying acid groups neutralized to between about 10 and 90 percent. The conventional definition of ionomers, as defined in U.S. Pat. No. 3,264,272 (Rees) states that an ionomer is an acid copolymer whose acid groups are from 10 to 90% neutralized. It will be recognized that an individual ionomer used to make a blend may be less than 10% neutralized, but that on blending with an ionomer of higher level of neutralization, the desired average level of neutralization can be achieved. It would even be possible to incorporate additional unneutralized acid copolymer and be within the bounds of the definition of the invention. In the melt, the ions in an ionomer are believed to be quite labile. As a result, the metal ions become distributed and associated with the acid groups of the polymer chains present. Thus, a polymer chain derived from an ionomer with a low level of neutralization will not remain at that low level of neutralization if the average level of neutralization is higher.

The third compositional requirement concerns the particular metal ions and their relative amounts in the blend. Suitable metal ions used to neutralize the underlying ethylene/acid copolymers include sodium, potassium, zinc, magnesium and calcium. Mixed ion systems are also possible.

Since full reaction of the acid and ion occurs, the amount of metal ion present defines the degree of neutralization, discussed above. The effective neutralization is adjusted between 0 and 80% by varying the amount of metal ions and acid level to control adhesion to a substrate at a desired level. Generally lower acid levels will require higher neutralization than higher acid levels when controlling adhesion to a high density polyethylene substrate in a peel seal structure.

Because the ions are labile in the melt, a composition containing a specific degree of neutralization and a mixture of metal ions may be obtained in several ways. The simplest way is by blending different metal ionomers each containing sufficient of each of the metal ions to provide the desired ratio of ion types. However, ionomers which contain more than one type of ion or ionomers with low amounts of a given ion, together with one with a high amount of that ion, and even an un-neutralized acid copolymer, can be blended to make a given blend, provided the final degree of neutralization is satisfied.

The delamination peel seal layer of the invention herein further comprises from about 1% to about 15% by weight high density polyethylene (HDPE). The HDPE is added to reduce the blocking tendency of the acid copolymer or corresponding ionomer. The HDPE is preferably present in an amount ranging from about 2% to about 10% by weight. The density of the HDPE preferably ranges from about 0.941 to about 0.960 g/cc and higher, as defined by Types III and IV in ASTM D-1248. More preferably, the density ranges from about 0.945 g/cc to about 0.965 g/cc. The melt index of the HDPE preferably ranges from about 0.1 to about 500, more preferably from about 0.5 to about 20. The melt index is typically measured following the procedure of ASTM D-1238.

Optionally, the delamination peel seal layer may comprise additional components, such as slip additives. Suitable slip additives include n-oleyl palmitamide, stearamide, benhenamide, and the like. Other useful additives, such as antioxidants, are also contemplated.

The invention herein also provides a delamination peel seal structure. The structure comprises a seal layer (as described above) coextruded with a thermoplastic film substate. Suitable thermoplastic films include films of nylon, polypropylene and polyester and preferably high density polyethylene. In materials where the delamination bonding strength cannot directly be obtained between the peel seal layer and substrate, as disclosed herein, then a third coextrudable adhesive layer between the thermoplastic and acid copolymer or ionomer can be used to control the bond strength to the desired level.

The delamination peel seal layer and structure of this invention are particularly useful in packaging applications where a heat-sealable, yet peelable, seal is desired. Such applications include cereal box liners, cracker and cookie packaging, or any dry food package requiring a peelable seal. Typically, a cereal box liner is made by coextruding an acid copolymer or ionomer layer with a layer of HDPE and forming the resulting laminate into a package. The acid copolymer or ionomer surfaces of the resulting laminate can be sealed together at the package opening by the application of heat and pressure. The resulting seal is peelable. The strength of the peel seal may be varied by varying the composition of the acid copolymer or ionomer, by coextrusion conditions and/or by the seal layer thickness. The seal layer thickness typically varies between about 4 and 50 micrometers.

The invention herein overcomes the common problem of blocking encountered in the production of such packages. The addition of HDPE to the acid copolymer or ionomer reduces blocking to a significant extent. The HDPE may be added to the acid copolymer or ionomer resin itself by melt blending into the acid copolymer or ionomer prior to pellet production or into the sealant film forming extruder feed, along with the resin, as a separate pellet source or polymer feed.

The invention will be further clarified by the following examples, which are intended to be purely exemplary of the invention.

### EXAMPLES

The following test methods were used for the examples:

| | |
|---|---|
| Melt Index | ASTM D-1238 Condition 190/2.16 |
| Gloss, 20° | ASTM D-2457 |
| Haze, % | ASTM D-1003 |
| Coefficient of Friction (COF) | ASTM D-1894 |

Block, in gm/sq. in, was determined by the following method. The blocking force in shear was measured by pulling apart in a parallel planar direction the layers of the blown film bubble which have been pressed together by going through the nip roll. A blocked sample area of four square inches (25.8 cm) is measured. The absolute values will vary with the specific blown film equipment used as well as the temperature at the nip roll.

### COMPARATIVE EXAMPLE A and EXAMPLES 1-3

A series of blends were made by adding high density polyethylene (HDPE) of 0.45 melt index (MI) and 0.950 g/cc density, containing a small amount of octene comonomer, to a sodium ionomer of ethylene/methacrylic acid to determine an effective level to improve or prevent film blocking.

Comparative Example A contained 0.7% silica by weight. This was added from a 20% silica concentrate in an ethylene/methacrylic acid copolymer (MAA) of 12 MI and 8.7% MAA. This blend was melt compounded in a 2 inch (5.08 cm) diameter single screw extruder at about 250°C melt temperature. The silica in the concentrate was 6 micron "Superfloss" diatomaceous earth from Celite Company.

The blends containing HDPE did not contain any silica. The ionomer used was a nominal 1.8 melt index containing 9.5 wt% MAA and neutralized 27% with sodium ion. This ionomer was obtained by modification of a more highly neutralized ionomer (about 53%) during the melt blending by adding an acid copolymer to effectively reduce its degree of neutralization to provide the final blend composition desired. This gives the identical properties as though the lower neutralized ionomer specified above was separately prepared.

Each of the melt blends were in turn dry blended at room temperature with 8.5% pellets of a slip additive concentrate. The slip additive was stearamide and was added via a concentrate of 20% stearamide in a 10 melt index, 8.7% MAA ethylene/methacrylic acid copolymer. These dry blends were then blown into 2.0 mil film from a 1.5 inch (3.8 cm)diameter extruder at 230°C melt temperature and 1.9:1 blow up ratio.

The data in Table I shows that equivalent antiblock protection is achieved at about 2-3% HDPE compared to 0.7% silica. No adverse effect on heat seal strength or hot tack was observed.

**TABLE I**

| *Example* | *HDPE* *%* | *Gloss* *20°* | *Haze* *%* | *COF* | *BLOCK* *g*/*sq.in.* |
|---|---|---|---|---|---|
| A | 0 | 74 | 3.8 | 0.2 | >114 |
| 1 | 2 | 94 | 4.2 | > 1 | >114 |
| 2 | 4 | 77 | 7.7 | 0.15 | 17 |
| 3 | 6 | 50 | 13.8 | < 0.1 | 0 |
| NOTE: 114 g/in² = 17.67 g/cm²; 17 g/in² = 2.64 g/cm². | | | | | |

### COMPARATIVE EXAMPLE B and EXAMPLES 4-5

For Example 4, a melt blend of sodium ionomer of ethylene/methacrylic acid copolymer and 6% of high density polyethylene (HDPE) were made in a single screw extruder at about 250°C melt temperature. The HDPE and the ionomer were equivalent to that used in Example 1.

For Example 5, a melt blend similar to Example 4 was made only the 6% HDPE was from a different supplier and contained no comonomer. The melt index of the HDPE was 0.46 and density was 0.960 g/cc.

In Comparative Example B, a similar formula was made but "Superfloss" silica was added at the 0.7% level in place of the HDPE. This was added from a 20% silica concentrate in an ethylene/methacrylic acid copolymer (MAA) of 12 MI and 8.7% MAA. This was also homogenized by melt blending in a single screw extruder at 250°C melt temperature.

Each of the above blends were in turn dry blended at room temperature with 8.5% pellets of a slip additive concentrate. The slip additive was stearamide and was added via a concentrate of 20% stearamide in a 10 Melt Index, 8.7% MAA ethylene/methacrylic acid copolymer. These dry blends were then blown into 2.0 mil film from a 1.5 inch (3.8 cm)diameter extruder with a 1.9:1 blow up ratio.

**TABLE II**

| *Example* | *MELT INDEX* | *Gloss* *20°* | *Haze* *%* | *COF* | *BLOCK g*/*sq.in.* |
|---|---|---|---|---|---|
| B | 2.2 | 84 | 3.6 | 0.21 | 255 |
| 4 | 2.0 | 42 | 16.5 | 0.13 | 0 |
| 5 | 2.0 | 46 | 14.9 | 0.12 | 0 |
| NOTE: 255 g/in² = 39.53 g/cm². | | | | | |

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A delamination peel seal layer comprising a blend of:
(a) an ionomer that is up to 80% neutralized, and
(b) 1% to 15% by weight of high density polyethylene.

2. The delamination peel seal layer of claim 1 further comprising a slip additive.

3. The delamination peel seal layer of claim 1 wherein the high density polyethylene comprises 2% to 10% by weight.

4. The delamination peel seal layer of claim 1 wherein the high density polyethylene has a density of at least 0.941 g/cc.

5. The delamination peel seal layer of claim 1 wherein the high density polyethylene has a melt index ranging from 0.1 to 500.

6. The delamination peel seal layer of claim 1, wherein the ionomer is an ethylene/methacrylic acid copolymer, having 9.5 weight percent methacrylic acid and being 27% neutralized, and the high density polyethylene exhibits a melt index of 0.45, a density of 0.950 g/cc and comprises 4% to 8% by weight of the seal layer.

7. A delamination peel seal structure comprising a seal layer coextruded with a thermoplastic film, wherein the seal layer comprises a blend of
(a) an ionomer that is up to 80% neutralized, and
(b) 1% to 15% by weight of high density polyethylene.

8. The delamination peel seal structure of claim 7 wherein the thermoplastic film comprises high density polyethylene.

9. The delamination peel seal structure of claim 7 wherein the high density polyethylene in the seal layer comprises 2% to 10% by weight.

10. The delamination peel seal structure of claim 7 wherein the high density polyethylene in the seal layer has a melt index ranging from 0.1 to 500.

11. The delamination peel seal structure of claim 7 wherein the ionomer is ethylene/methacrylic acid copolymer, having 9.5 weight percent methacrylic acid and being 27% neutralized, and the high density polyethylene exhibits a melt index of 0.45, a density of 0.950 g/cc and comprises 4% to 8% by weight of the seal layer.

12. A package comprising the delamination peel seal structure of claim 7.

13. A cereal box liner comprising the delamination peel seal structure of claim 7.

14. A process for reducing the blocking tendency of a resin comprising an ionomer, comprising the step of adding 1% to 15% by weight HDPE to the resin by melt blending or into a sealant film forming extruder as a separate polymer feed along with the resin, wherein the ionomer is up to 80% neutralized.

## Patentansprüche

1. Durch Delamination abziehbare Versiegelungsschicht, welche eine Mischung aufweist aus:
(a) einem Ionomer, das bis zu 80% neutralisiert ist, und
(b) 1 bis 15 Gew.-% eines Polyethylens hoher Dichte.

2. Durch Delamination abziehbare Versiegelungsschicht gemäß Anspruch 1, die darüber hinaus ein Gleitmittel enthält.

3. Durch Delamination abziehbare Versiegelungsschicht gemäß Anspruch 1, wobei das Polyethylen hoher Dichte 2 bis 10 Gew.-% ausmacht.

4. Durch Delamination abziehbare Versiegelungsschicht gemäß Anspruch 1, wobei das Polyethylen hoher Dichte eine Dichte von mindestens 0,941 g/cm³ aufweist.

5. Durch Delamination abziehbare Versiegelungsschicht gemäß Anspruch 1, wobei das Polyethylen hoher Dichte einen Schmelzindex von 0,1 bis 500 aufweist.

6. Durch Delamination abziehbare Versiegelungsschicht gemäß Anspruch 1, wobei das Ionomer ein Ethylen-/Methacrylsäure-Copolymer ist, das 9,5 Gew.-% Methacrylsäure aufweist und zu 27% neutralisiert ist, und wobei das Polyethylen hoher Dichte einen Schmelzindex von 0,45 aufweist, eine Dichte von 0,950 g/cm³ besitzt und 4 bis 8 Gew.-% der Versiegelungsschicht ausmacht.

7. Durch Delamination abziehbare Versiegelungsstruktur, die eine mit einem thermoplastischen Dünnschichtmaterial coextrudierte Versiegelungsschicht enthält, wobei die Versiegelungsschicht eine Mischung aufweist aus:
(a) einem Ionomer, das bis zu 80% neutralisiert ist, und
(b) 1 bis 15 Gew.-% eines Polyethylens hoher Dichte.

8. Durch Delamination abziehbare Versiegelungsstruktur gemäß Anspruch 7, wobei die thermoplastische Dünnschicht ein Polyethylen hoher Dichte enthält.

9. Durch Delamination abziehbare Versiegelungsstruktur gemäß Anspruch 7, wobei das Polyethylen hoher Dichte in der Versiegelungsschicht 2 bis 10 Gew.-% ausmacht.

10. Durch Delamination abziehbare Versiegelungsstruktur gemäß Anspruch 7, wobei das Polyethylen hoher Dichte in der Versiegelungsschicht einen Schmelzindex von 0,1 bis 500 aufweist.

11. Durch Delamination abziehbare Versiegelungsstruktur gemäß Anspruch 7, wobei das Ionomer ein Ethylen-/Methacrylsäure-Copolymer ist, das 9,5 Gew.-% Methacrylsäure aufweist und zu 27% neutralisiert ist, und wobei das Polyethylen hoher Dichte einen Schmelzindex von 0,45 aufweist, eine Dichte von 0,950 g/cm³ besitzt und 4 bis 8 Gew.-% der Versiegelungsschicht ausmacht.

12. Verpackung, welche die durch Delamination abziehbare Versiegelungsstruktur gemäß Anspruch 7 enthält.

13. Auskleidung in einem Behälter für Getreide, welche die durch Delamination abziehbare Versiegelungsstruktur gemäß Anspruch 7 enthält

14. Verfahren zur Verringerung der Blockierungsneigung eines ein Ionomer enthaltenden Kunstharzes mit dem Verfahrensschritt der Zugabe von 1 bis 15 Gew.-% eines HDPE zu dem Kunstharz durch ein Schmelzvermischen, oder als separate Polymerzugabe zusammen mit dem Kunstharz in einen Extruder zur Herstellung eines Versiegelungsdünnschichtmaterials, wobei das Ionomer bis zu 80% neutralisiert wird.

## Revendications

1. Couche de scellement pelable par délaminage comprenant un mélange:
(a) d'un ionomère qui est neutralisé jusqu'à 80%, et
(b) de 1% à 15% en poids d'un polyéthylène haute densité (HDPE).

2. Couche de scellement pelable par délaminage suivant la revendication 1, comprenant en outre un additif de glissement.

3. Couche de scellement pelable par délaminage suivant la revendication 1, dans laquelle le polyéthylène haute densité constitue de 2% à 10% en poids.

4. Couche de scellement pelable par délaminage suivant la revendication 1, dans laquelle le polyéthylène haute densité possède une densité d'au moins 0,941 g/cc.

5. Couche de scellement pelable par délaminage suivant la revendication 1, dans laquelle le polyéthylène haute densité possède un indice de fluidité variant de 0,1 à 500.

6. Couche de scellement pelable par délaminage suivant la revendication 1, dans laquelle l'ionomère est un copolymère d'éthylène/acide méthacrylique, contenant 9,5 pour-cent en poids d'acide méthacrylique et qui est neutralisé à 27% et le polyéthylène haute densité affiche un indice de fluidité de 0,45, une densité de 0,950 g/cc et constitue de 4% à 8% en poids de la couche de scellement.

7. Structure de scellement pelable par délaminage comprenant une couche de scellement co-extrudée avec un film thermoplastique, dans laquelle la couche de scellement comprend un mélange:
(a) d'un ionomère qui est neutralisé jusqu'à 80%, et
(b) de 1% à 15% en poids d'un polyéthylène haute densité.

8. Structure de scellement pelable par délaminage suivant la revendication 7, dans laquelle le film thermoplastique comprend un polyéthylène haute densité.

9. Structure de scellement pelable par délaminage suivant la revendication 7, dans laquelle le polyéthylène haute densité dans la couche de scellement constitue de 2% à 10% en poids.

10. Structure de scellement pelable par délaminage suivant la revendication 7, dans laquelle le polyéthylène haute densité dans la couche de scellement possède un indice de fluidité variant de 0,1 à 500.

11. Structure de scellement pelable par délaminage suivant la revendication 7, dans laquelle l'ionomère est un copolymère d'éthylène/acide méthacrylique, contenant 9,5 pour-cent en poids d'acide méthacrylique et qui est neutralisé à 27% et le polyéthylène haute densité affiche un indice de fluidité de 0,45, une densité de 0,950 g/cc et constitue de 4% à 8% en poids de la couche de scellement.

12. Emballage comprenant la structure de scellement pelable par délaminage suivant la revendication 7.

13. Doublure de boîte de céréales comprenant la structure de scellement pelable par délaminage suivant la revendication 7.

14. Procédé pour la réduction de la tendance à l'adhérence d'une résine comprenant un ionomère, comprenant l'étape d'ajout de 1% à 15% en poids d'un HDPE à la résine par un mélange à l'état fondu ou dans une extrudeuse formant un film de scellement comme une alimentation de polymère séparée accompagnée de la résine, dans lequel l'ionomère est neutralisé jusqu'à 80%.
